# EUROPÄISCHE PATENTSCHRIFT

(11) **EP 0 594 807 B1**
(45) Veröffentlichungstag und Bekanntmachung des Hinweises auf die Patenterteilung: **03.07.1996**
(21) Anmeldenummer: 93908798.7
(22) Anmeldetag: 21.04.1993
(51) Int. Cl.: H01H 1/40, H01H 21/24, H01H 25/06, H01H 19/63

(54) **VORRICHTUNG ZUM EIN- UND AUSSCHALTEN ELEKTRISCHER VERBRAUCHER, INSBESONDERE FÜR ANZEIGEINSTRUMENTE IM ARMATURENBRETT VON KRAFTFAHRZEUGEN**
DEVICE FOR SWITCHING ON AND OFF ELECTRIC CONSUMERS, IN PARTICULAR DISPLAY INSTRUMENTS IN THE DASHBOARD OF MOTOR VEHICLES
DISPOSITIF POUR LA MISE EN CIRCUIT ET HORS CIRCUIT D'UN CONSOMMATEUR ELECTRIQUE, EN PARTICULIER POUR INSTRUMENTS DE CONTROLE SUR UN TABLEAU DE BORD D'UN VEHICULE AUTOMOBILE

(30) Priorität: 13.05.1992 DE 4215694
(43) Veröffentlichungstag der Anmeldung: 04.05.1994
(73) Patentinhaber: Moto Meter GmbH, D-71229 Leonberg (DE)
(72) Erfinder: MÜLLER-SYBRICHS, Ralf, D-7257 Ditzingen (DE)
(86) Internationale Anmeldenummer: DE9300342
(87) Internationale Veröffentlichungsnummer: WO9323862

(56) Entgegenhaltungen:
- DE-U- 7 828 742
- GB-A- 2 094 063
- US-A- 2 229 585
- US-A- 4 204 098

## Beschreibung

Die Erfindung geht aus von einer Vorrichtung zum Ein- und Ausschalten elektrischer Verbraucher, insbesondere für Anzeigeinstrumente im Armaturenbrett von Kraftfahrzeugen, nach der Gattung des Hauptanspruchs. Es ist schon eine derartige handelsübliche Vorrichtung bekannt, die sich aus relativ vielen Bauteilen zusammensetzt, demzufolge entsprechend teuer ist und zu ihrer vorgesehenen Montage auf einer Leiterplatte nicht nur Schrauben, sondern auch noch Lötverbindungen zu den auf der Leiterplatte verlaufenden Leiterbahnen aufweist; aufgrund der genannten Lötverbindungen ist ein problemloser Austausch derartiger, evtl. defekt gewordener Vorrichtungen nicht möglich.

Der Erfindung liegt demgegenüber die Aufgabe zugrunde, eine Vorrichtung nach der Gattung des Hauptanspruchs zu entwickeln, die gegenüber der Vorrichtung nach dem vorstehend genannten Stand der Technik deutlich billiger ist und im Falle ihres Defektes problemlos gegen eine neue Vorrichtung ausgetauscht werden kann; die Anzahl der die Vorrichtung bildenden Bauelemente soll dazu reduziert werden, die Bauelemente selbst sollen wirtschaftlich herstellbar sein und die Vorrichtung soll derart vormontierbar sein, daß sie fertigungsgünstig auf der zugeordneten Leiterplatte befestigt werden kann.

Diese Aufgabe wird erfindungsgemäß mittels der im Hauptanspruch aufgeführten Merkmale gelöst.

Durch die in den Unteransprüchen aufgeführten Maßnahmen sind vorteilhafte Weiterbildungen und Verbesserungen der im Hauptanspruch angegebenen Vorrichtung möglich. Besonders vorteilhaft wird die Aufgabe dann gelöst, wenn die Vorrichtung einen Aufbau gemäß den Merkmalen im Anspruch 2 hat.

Ein Ausführungsbeispiel der Erfindung ist in der Zeichnung dargestellt und in der nachfolgenden Beschreibung näher erläutert.

Es zeigen
Figur 1 einen Längsschnitt durch eine auf einer Leiterplatte angeordnete Vorrichtung gemäß der Erfindung in vergrößerter Darstellung,
Figur 2 die Draufsicht der Vorrichtung nach Figur 1 (die in Figur 1 dargestellte Skalenträgerplatte wurde weggelassen),
Figur 3 eine perspektivische Darstellung der erfindungsgemäßen Vorrichtung in AUS-Stellung in vergrößertem Maßstab und
Figur 4 eine perspektivische Darstellung der Vorrichtung nach Figur 3 in einer ihrer beiden möglichen EIN-Stellungen.

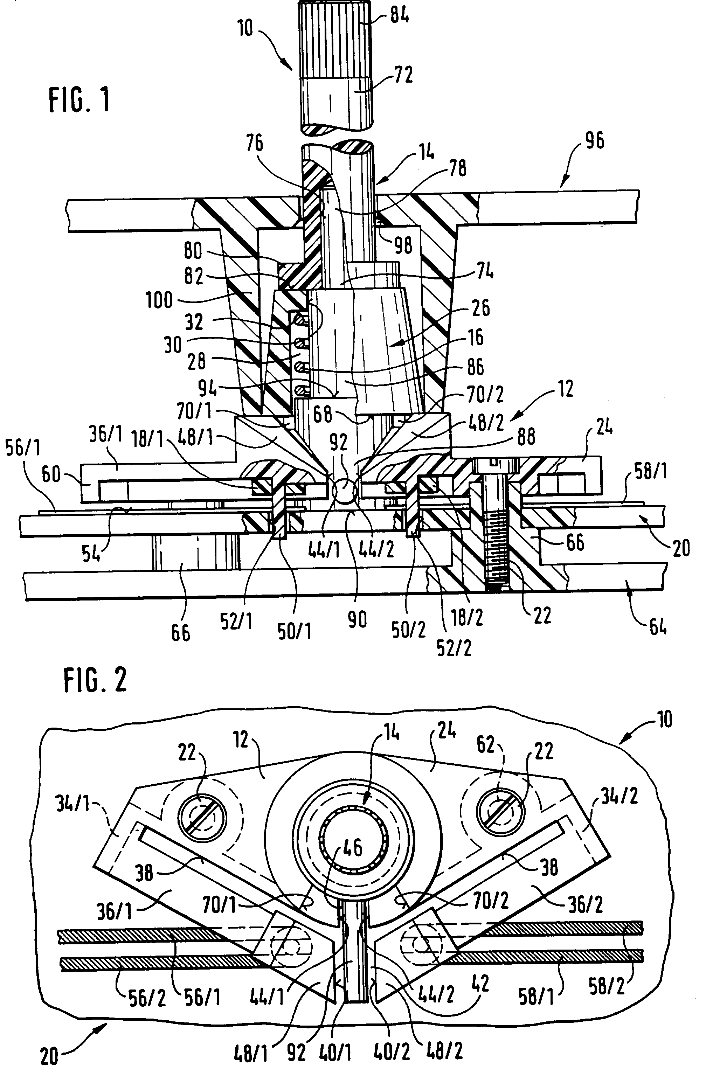

Die in den Figur 1 bis 5 dargestellte Vorrichtung 10 zum Ein- und Ausschalten elektrischer Verbraucher ist insbesondere für Anzeigeinstrumente im Armaturenbrett von Kraftfahrzeugen vorgesehen und kann beispielsweise für das Ein- bzw. Verstellen einer Uhr Verwendung finden. Diese Vorrichtung 10 setzt sich im wesentlichen aus den folgenden Bauelementen zusammen: einem Gehäuse 12, einem Schaltknopf 14, einem Federelement 16, elektrisch leitfähigen Kontaktelementen 18, einer Leiterplatte 20 und Befestigungsmitteln 22, bei denen es sich vorzugsweise um Schrauben handelt.

Das Gehäuse 12 besteht aus einem temperaturstabilen, elastischen Material, das möglichst wenig Kaltfluß aufweist und spritz- bzw. preßtechnisch gut verarbeitbar ist; als Material für dieses Gehäuse 12 ist glasfaserverstärktes Polyamid geeignet. Dieses Gehäuse 12 hat eine längliche Grundplatte 24, von der aus sich leiterplattenfern das mit angeformte Kopfteil 26 erstreckte dieses Kopfteil 26 ist auf der Grundplatte 24 etwa mittig angeordnet. Durch dieses Kopfteil 26 und auch durch die Grundplatte 24 verläuft eine rohrartige Führung 28, die jedoch an ihrem leiterplattenfernen Endabschnitt einen Durchlaß 30 kleineren Durchmessers hat und demzufolge eine Schulter 32 bildet.

In dem peripheren Bereich, wie z.B. an den beiden freien Endabschnitten 34/1 bzw. 34/2 der Grundplatte 24 des Gehäuses 12 ist jeweils eine Blattfeder 36/1 bzw. 36/2 mit angeformt, die aus dem gleichen Material wie das Gehäuse 12 bestehen, die sich mit geringem Abstand entlang einer der Längsseiten 38 der Grundplatte 24 erstrecken, mit ihren freien Enden 40/1 bzw. 40/2 unter Bildung eines Spaltes 42 parallel gegenüberstehen und dabei in bevorzugter Weise untereinander und auch mit der Grundplatte 24 in einer Ebene angeordnet sind. Die genannte Längsseite 38 der Grundplatte 24 ist im vorliegenden Ausführungsbeispiel abgewinkelt und wird durch einen zwischen zwei seitlichen Halteflächen 44/1 bzw. 44/2 begrenzten Schlitz 46 unterbrochen. Dieser Schlitz 46 verläuft radial zur Führung 28 im Gehäuse 12 und fluchtet mit dem Spalt 42 zwischen den beiden freien Enden 40/1 bzw. 40/2 der beiden Blattfedern 36/1 und 36/2.

Auf der der Leiterplatte 20 abgewendeten Seite der Blattfedern 36/1 bzw. 36/2 ist jeweils am freien Endabschnitt eine Schalt-Rampe 48/1 bzw. 48/2 mit angeformt, die vom jeweiligen freien Ende 40/1 bzw. 40/2 keilförmig ansteigt.

Auf den den Schalt-Rampen 48/1 bzw. 48/2 entgegengesetzten Seiten der Blattfedern 36/1 bzw. 36/2 ist jeweils ein bevorzugt zapfenförmiges Haltelement 50/1 bzw. 50/2 mit angeformt, die sich in Richtung Leiterplatte 20 erstrecken und in bevorzugter Weise in entsprechend fluchtende Löcher 52/1 bzw. 52/2 in der Leiterplatte 20 tauchen. Auf diesen Haltelementen 50/1 bzw. 50/2 ist jeweils eines der Kontaktelemente 18/1 festgelegt, die mittels nicht dargestellter Arretierungsmittel (z.B. Widerhaken, Kleber, Einrastung o.ä.) darauf gehalten werden und - wie im Beispiel dargestellt - bevorzugt ringförmig gestaltet sind. Die Kontaktelemente 18/1 bzw. 18/2 bestehen vorzugsweise aus elektrisch leitendem Gummi und sind in ihrer Dicke so bemessen, so daß sie bei der weiter hinten beschriebenen AUS-Stellung der Vorrichtung 10 mit Abstand über den auf der Oberseite 54 der Leiterplatte 20 verlaufenden Leiterbahnen 56/1 bzw. 56/2 sowie auch oberhalb der Leiterbahnen 58/1 bzw. 58/2 stehen. Die Kontaktelemente 18/1 bzw. 18/2 liegen mit ihrer einen Seite an der Unterseite der Grundplatte 24 an.

An der der Leiterplatte 20 zugewendeten Unterseite der Grundplatte 24, ggf. aber auch auf der Oberseite, können Versteifungsrippen 60 mit angeformt sein.

Zur Festlegung des Gehäuses 12 auf der Leiterplatte 20 sind in der Grundplatte 24 Durchgangsbohrungen 62 für die Befestigungsmittel 22 vorgesehen. Im vorliegenden Beispiel werden Schrauben als Befestigungsmittel 22 verwendet, die in entsprechende Gewinde in der Leiterplatte 20, zumeist jedoch in einer parallel zur Leiterplatte 20 angeordneten Tragplatte 64 vorgesehen sind; das Gehäuse 12, die Leiterplatte 20 und eine ggf. mit angeordnete Tragplatte 64 können durch Führungsansätze 66 an der Tragplatte 64, durch separate Buchsen o.ä. fixiert sein.

Das Gehäuse 12 ist seitlich, und zwar im Bereiche der bereits genannten Halteflächen 44/1 bzw. 44/2 mit einer Aussparung 68 versehen, die sich von dem zwischen den Halteflächen 44/1 bzw. 44/2 gebildeten Schlitz 46 leiterplattenfern erstreckt und derart bemessen ist, so daß sie eine weiter hinten erläuterte Begrenzung für eine Axialbewegung des Schaltknopfes 14 darstellt und in ihrer Breite Seitenanschläge 70/1 bzw. 70/2 für die auch noch später zu erläuternde Drehbewegung des Schaltknopfes 14 besitzt. Die Halteflächen 44/1 bzw. 44/2 sind über nicht bezeichnete Schrägen mit den Seitenanschlägen 70/1 bzw. 70/2 verbunden.

Der Schaltknopf 14 setzt sich aus zwei Bauelementen zusammen, und zwar aus seinem Kopfteil 72 und seinem Fußteil 74; beide bevorzugt auch aus Kunststoff bestehenden Bauteile 72 und 74 werden bei der Vormontage mittels bekannter Maßnahmen axial miteinander verbunden; im vorliegenden Beispiel wurde das Kopfteil 72 leiterplattennah mit einem Sackloch 76 versehen, in dem ein am leiterplattenfernen Endabschnitt des Fußteiles 74 angeformter Zapfen 78 festgelegt ist. Die Befestigung dieses Zapfens 78 in dem Sackloch 76 kann beispielsweise durch Verkleben oder Einrastungen erfolgen. Das Kopfteil 72 hat an seinem leiterplattennahen Endabschnitt einen Flansch 80, mit dem er sich in der AUS-Stellung der Vorrichtung 10 nahe der leiterplattenfernen Stirnfläche 82 des Gehäuse-Kopfteils 26 befindet.

Der leiterplattenferne Endabschnitt des Kopfteiles 72 dient als Griffabschnitt 84, der grifffreundlich mittels einer Rändelung o.ä. versehen ist. Dieses Kopfteil 72 besteht aus einem Material, welches temperaturstabil und spritz- bzw. preßtechnisch gut verarbeitbar ist; als ein solches Material ist ein Polyesterelastomer geeignet. Dieses Kopfteil 72 ist im wesentlichen zylindrisch und in seiner Länge so bemessen, so daß es aus dem betroffenen Anzeigeinstrument herausragt und vor dessen (nicht dargestellter) durchsichtiger Scheibe greifbar ist.

Das Fußteil 74 des Schaltknopfes 14 besteht ebenfalls aus einem temperaturstabilen, möglichst auch elektrisch isolierenden Material, das spritz- oder preßtechnisch gut verarbeitbar ist, darüberhinaus beim Zusammenspiel mit anderen Materialien reibungsarm ist und außerdem auch eine mechanisch hohe Stabilität besitzt; für diesen Zweck ist Polyacetal geeignet. Dieses Fußteil 74 kann in Axialrichtung in drei Abschnitte unterteilt werden, und zwar in den bereits genannten Zapfen 78, dem sich in Richtung Leiterplatte 20 ein Mittelabschnitt 86 größeren Durchmessers anschließt, welchem sich dann ein Unterabschnitt 88 mit einem solchen Durchmesser anschließt, so daß er in der Führung 28 im Kopfteil 26 des Gehäuses 12 in Längsrichtung exakt geführt ist. Die Endfläche 90 des Unterabschnittes 88 endet an der Leiterplatte 20. Seitlich aus dem Unterabschnitt 8 des Schaltknopf-Fußteiles 74 ragt ein Schaltelement 92 heraus, welches bevorzugt zylindrisch ist und derart angeordnet ist, so daß es bei AUS-Stellung der Vorrichtung 10 innerhalb des Spaltes 42 zwischen den beiden Halteflächen 36/1 und 36/2 als auch in dem Schlitz 46 in der Grundplatte 24 liegt. Dieses Schaltelement 92 wird vorzugsweise an das Schaltknopf-Fußteil 74 gleich mit angeformt, kann aber auch mittels eines anderen bekannten Verfahrens (Schweißen, Kleben o.ä.) am Unterabschnitt 8 befestigt sein.

In dem ringförmigen Raum, der zwischen dem Mittelabschnitt 86 des Schaltknopf-Fußteils 74 und der Führung 28 im Gehäuse-Kopfteil 26 gebildet ist, ist das unter mechanischer Vorspannung stehende Federelement 16 untergebracht, das sich einerseits an der Schulter 32 in der Führung 28 des Gehäuse-Kopfteiles 26 und andererseits auf dem zwischen Mittelabschnitt 86 und Unterabschnitt 88 gebildeten Absatz 94 abstützt; als Federelement 16 findet vorzugsweise eine den Fußteil-Mittelabschnitt 86 umfassende Schraubenfeder Anwendung. Der Fußteil-Mittelabschnitt 86 ist in seinem Querschnitt so bemessen, daß er in dem Durchlaß 30 im Gehäuse-Kopfteil 26 geführt ist.

In der Figur 1 ist ergänzend eine Skalenträgerplatte 96 mit dargestellt, in der sich eine Öffnung 98 zur Durchführung des Schaltknopf-Kopfteils 72 befindet und die mittels einer an die Skalenträgerplatte 96 angeformten in Richtung Leiterplatte 20 weisenden und über das Gehäuse-Kopfteil 26 der Vorrichtung 10 greifenden Führungshülse 100 fixiert ist.

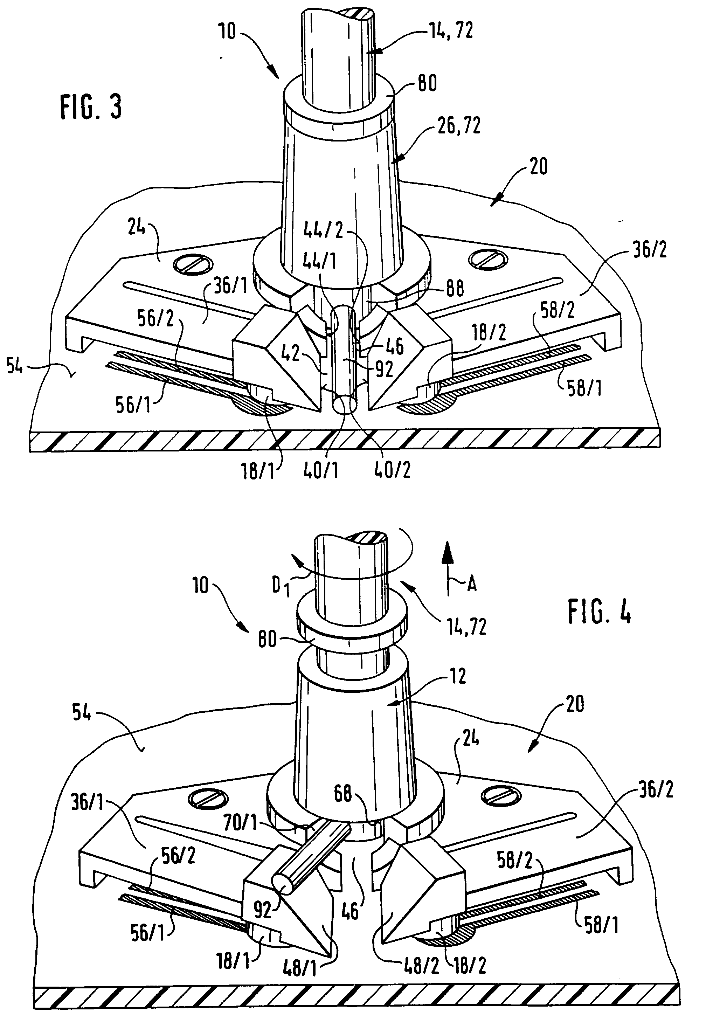

Die Funktion dieser Vorrichtung 10 ist in den Figuren 3 und 4 dargestellt. Die Figur 3 zeigt die Vorrichtung 10 in ihrer Grundstellung (AUS-Stellung), in welcher die Leiterbahnen 56/1 und 56/2 bzw. die Leiterbahnen 58/1 und 58/2 auf der Oberseite 54 der Leiterplatte 20 elektrisch noch unverbunden sind. In dieser Grundstellung befindet sich das Schaltelement 92 fixiert zwischen den beiden Halteflächen 44/1 und 44/2, welche den Schlitz 46 bilden, und auch zwischen den beiden freien Enden 40/1 und 40/2 der beiden Blattfedern 36/1 und 36/2, welche den Spalt 42 bilden; der Flansch 80 des Kopfteiles 72 des Schaltknopfes 14 befindet sich dabei nahe dem Kopfteil 72 des Gehäuses 26 und wird in dieser Stellung durch das in der Figur 1 dargestellte Federelement 16 gehalten. In dieser Grundstellung stehen die beiden Kontaktelemente 18/1 bzw. 18/2, die an der leiterplattennahen Seite der jeweiligen Blattfeder 36/1 bzw. 36/2 angeordnet sind, mit Abstand den in einer ersten Schaltstellung elektrisch zu verbindenden Leiterbahnen 56/1 und 56/2 bzw. den in einer zweiten Schaltstellung zu verbindenden Leiterbahnen 58/1 und 58/2 gegenüber.

In der Figur 4 ist eine der beiden möglichen EIN-Stellungen der Vorrichtung 10 dargestellt, die durch axiales kurzwegiges Ziehen des Schaltknopfes 14 in mit A bezeichneter Pfeilrichtung und anschließendes im Uhrzeigersinn erfolgendes kurzwegiges Drehen des Schaltknopfes 14 in mit D1 bezeichneter Pfeilrichtung erfolgt. Infolge des Ziehens und des im Uhrzeigersinn D1 folgenden Drehens am Schaltknopf 14 wird das Schaltelement 92 aus dem fixierenden Schlitz 46 des Gehäuses 12 herausgezogen und damit seiner seitlichen Fixierung entzogen; die mögliche axiale Längsbewegung des Schaltknopfes 14 wird durch die Höhe der Aussparung 68 begrenzt und die Drehbewegung D1 kann nur bis zum Seitenanschlag 70/1 in der Grundplatte 24 erfolgen. Bei der Drehbewegung D1 gelangt das Schaltelement 92 auf die Schalt-Rampe 48/1 und drückt demzufolge den freien Endabschnitt der Blattfeder 36/1 in Richtung Leiterplatte 20. Die Schalt-Rampe 48/1 ist so bemessen, daß dann das an dieser Blattfeder 36/1 befestigte Kontaktelement 18/1 auf die beiden zugeordneten Leiterbahnen 56/1 und 56/2 drückt und somit diese elektrisch miteinander verbindet.

Bei der nicht dargestellten zweiten möglichen Schaltstellung, in der der Schaltknopf 14 gegen den Uhrzeigersinn zu drehen wäre, würde das Schaltelement 92 mit der Schalt-Rampe 48/2 zusammenwirken und mittels des Kontaktelementes 18/2 an der Blattfeder 36/2 die beiden Leiterbahnen 58/1 und 58/2 elektrisch miteinander verbinden.

Der Flansch 80 am Schaltknopf 14 hat bei den beiden vorgenannten Schaltstellungen deutlichen Abstand vom Gehäuse 12 der Vorrichtung 10.

Die Leiterbahnen 56/1 und 56/2 bzw. 58/1 und 58/2 führen jeweils zu den zugeordneten elektrischen Schaltkreisen mit ihren (nicht dargestellten) Verbrauchern.

Nach dem Loslassen des Schaltknopfes 14 wird dieser infolge des in Figur 1 gezeigten, unter mechanischer Vorspannung stehenden Federelementes 16 in seine Grundstellung zurückgedrückt, so daß dann das Schaltelement 92 wieder in den Schlitz 46 in der Grundplatte 24 einrastet und wieder fixiert ist.

Sofern es der Anwendungszweck verlangt, kann auf der der Längsseite 38 der Grundplatte 24 entgegengesetzten Längsseite auch noch ein zweites Blattfeder-Paar und entsprechend dann auch ein zusätzliches am Unterabschnitt 88 des Schaltknopf-Fußteils 74 mit angebrachtes Schaltelement mit vorgesehen werden.

Gemäß einer anderen Ausführungsform der Vorrichtung kann die Grundplatte 24 - in Draufsicht gesehen - kreisförmig, oval, langrund o.ä. gestaltet sein; die die Schalt-Rampen 48/1 bzw. 48/2 tragenden Blattfedern 36/1 bzw. 36/2 sind der jeweiligen Form der Grundplatte 24 anzupassen.

Weiterhin ist es möglich, an mindestens einer der Blattfedern 36/1, 36/2 mittels des Kontaktelementes 18/1, 18/2 mehr als zwei Leiterbahnen 56/1, 56/2 bzw. 58/1, 58/2 elektrisch zu verbinden. An jeder Blattfeder 36/1, 36/2 können alternativ auch mehrere unabhängige Kontaktelemente für verschiedene Leiterbahnpaare angebracht sein.

Alternativ zum Verbinden von Grundplatte 24 und Leiterplatte 20 bzw. Tragplatte 64 mittels Schrauben können aber auch andere bekannte Befestigungsmittel 22 (z.B. Nieten) Verwendung finden.

## Patentansprüche

1. Vorrichtung (10) zum Ein- und Auschalten elektrischer Verbraucher, insbesondere für Anzeigeinstrumente im Armaturenbrett von Kraftfahrzeugen mit einem an einer Leiterplatte (20) befestigten Gehäuse (12), dessen Grundplatte (24) parallel zur Leiterbahnen (56/1, 56/2; 58/1, 58/2) tragenden Oberseite (54) der Leiterplatte (20) angeordnet ist und das einen leiterplattenfern, etwa mittig aus dem Gehäuse (12) herausragenden, senkrecht zur Grundplatte (24) stehenden Schaltknopf (14) aufweist, wobei der Schaltknopf (14) aus einer im Drehsinn mittigen, die betroffenen Leiterbahnen (56/1, 56/2; 58/1, 58/2) elektrisch in AUS-Stellung haltenden Grundstellung durch axiales, kurzwegiges und gegen die mechanische Vorspannung eines Federelementes (16) vorzunehmendes Ziehen und anschließendes kurzwegiges Drehen in eine seiner beiden möglichen Drehrichtungen jeweils das als EIN-Stellung bezeichnete elektrische Verbinden von durch die Drehrichtung bestimmten elektrischen Leitern auf der Leiterplatte (20) bewirkt und wobei die Vorrichtung (10) nach dem Loslassen des Schaltknopfes (14) selbsttätig wieder in ihre Grundstellung zurückspringt, dadurch gekennzeichnet, daß die Grundplatte (24) des Gehäuses (12) in ihrem peripheren Bereich wie z.B. an ihren beiden freien Endabschnitten (34/1, 34/2) entlang einer gemeinsamen Grundplatten-Längsseite (38) jeweils mit einer angeformten Blattfeder (36/1, 36/2) versehen ist, die an ihren freien Endabschnitten auf der von der Leiterplatte (20) wegweisenden Seite jeweils eine vom jeweiligen freien Endabschnitt aus keilförmig ansteigende, mit angeformte Schalt-Rampe (48/1, 48/2) haben, außerdem auf der der jeweiligen Schalt-Rampe (48/1, 48/2) entgegengesetzten Seite der entsprechenden Blattfeder (36/1, 36/2) ein ebenfalls mit angeformtes, vorzugsweise zapfenförmiges Halteelement (50/1, 50/2) besitzen, an dem jeweils ein elektrisch leitfähiges Kontaktelement (18/1, 18/2) festgelegt ist, welches sich in AUS-Stellung der Vorrichtung (10) mit geringem Abstand direkt oberhalb der in EIN-Stellung mittels des zugehörigen Kontaktelementes (18/1, 18/2) elektrisch zu verbindenden Leiterbahnen (56/1, 56/2; 58/1, 58/2) auf der Oberseite (54) der Leiterplatte (20) befindet, und daß zwischen den beiden einander in einer Ebene gegenüberstehenden freien Enden (40/1, 40/2) der Blattfedern (36/1, 36/2) ein Spalt (42) in einer solchen Breite gebildet ist, so daß darin ein seitlich aus dem Unterabschnitt (88) des Schaltknopfes (14) ragendes, in Grundstellung beiderseits fixiertes Schaltelement (92) Platz findet.

2. Vorrichtung (10) nach Anspruch 1, dadurch gekennzeichnet, daß sich der Schaltknopf (14) aus einem Kopfteil (72) und einem axial mit dem Kopfteil (72) verbundenem Fußteil (74) zusammensetzt, wobei der auf der Leiterplatte (20) aufstehende Unterabschnitt (88) des Fußteiles (74) das Schaltelement (92) trägt und der sich leiterplattenfern anschließende Mittelabschnitt (86) einen kleineren Durchmesser als der Unterabschnitt (88) hat und koaxial vom Federelement (16) umfaßt wird, welches sich einerseits auf dem zwischen Unterabschnitt (88) und Mittelabschnitt (86) gebildeten Absatz (94) und andererseits an der leiterplattenfernen Schulter (32) der Fußteil-Führung (28) im Gehäuse-Kopfteil (26) mechanisch vorgespannt abstützt.

3. Vorrichtung (10) nach einem der Ansprüche 1 oder 2, dadurch gekennzeichnet, daß an der Grundplatte (24) des Gehäuses (12) im Bereich beiderseits vom Schaltelement (92) je eine Haltefläche (44/1, 44/2) für die mittige Grundstellung des Schaltelementes (92) vorgesehen ist.

4. Vorrichtung (10) nach einem der Ansprüche 1 bis 3, dadurch gekennzeichnet, daß an der Grundplatte (24) des Gehäuses (12) im Bereich beiderseits vom Schaltelement (92) je ein Seitenanschlag (70/1, 70/2) für die beiden EIN-Stellungen des Schaltelementes (92) vorgesehen ist.

5. Vorrichtung (10) nach einem der Ansprüche 1 bis 4, dadurch gekennzeichnet, daß Halteelemente (50/1, 50/2) für die Kontaktelemente (18/1, 18/2) vorgesehen sind, die bevorzugt zapfenförmig ausgebildet sind und eine derartige Länge aufweisen, so daß sie sowohl in der EIN- als auch in der AUS-Stellung verschiebbar in Löchern (52/1, 52/2) der Leiterplatte (20) geführt sind.

6. Vorrichtung (10) nach einem der Ansprüche 1 bis 5, dadurch gekennzeichnet, daß die Halteelemente (50/1, 50/2) Arretierungen z.B. Widerhaken, für die elastischen Kontaktelemente (18/1, 18/2) haben.

7. Vorrichtung (10) nach einem der Ansprüche 1 bis 6, dadurch gekennzeichnet, daß das Federelement (16) eine Schraubenfeder ist.

8. Vorrichtung (10) nach einem der Ansprüche 1 bis 7, dadurch gekennzeichnet, daß das Gehäuse (12) mit der Leiterplatte (20) und/oder zusätzlich noch mit einer die Leiterplatte (20) haltenden Tragplatte (64) mittels Schrauben als Befestigungsmittel (22) verbunden ist.

9. Vorrichtung nach einem der Ansprüche 1 bis 8, dadurch gekennzeichnet, daß die Grundplatte (24) des Gehäuses (12) mittels Führungsansätzen (66), Buchsen o.ä., die an der Leiterplatte (20) und/oder einer Tragplatte (64) festgelegt sind, in bezug auf die Leiterplatte (20) lagerichtig gehalten wird.

10. Vorrichtung (10) nach einem der Ansprüche 1 bis 9, dadurch gekennzeichnet, daß an der der Leiterplatte (20) zugewendeten Seite der Grundplatte (24) des Gehäuses (12) Verstärkungsrippen (60) mit angeformt sind.

## Claims

1. Device (10) for switching on and off electrical loads, in particular for display instruments in the dashboard of motor vehicles, having a housing (12) which is attached to a printed circuit board (20) and whose base plate (24) is arranged parallel to the upper side (54), bearing conductor tracks (56/1, 56/2; 58/1, 58/2), of the printed circuit board (20) and which has a switching knob (14) which protrudes out of the housing (12) approximately centrally at a distance from the printed circuit board and is positioned perpendicular with respect to the base plate (24), the switching knob (14) bringing about, by moving out of a basic position, which is central in the direction of rotation and keeps the respective conductor tracks (56/1, 56/2; 58/1, 58/2) electrically in the Off position, by axial pulling of a spring element (16) over a short distance counter to the mechanical pretensioning and subsequent rotation over a short distance in one of its two possible directions of rotation, in each case the electrical connection, designated as the On position, of electrical conductors, determined by the direction of rotation, on the printed circuit board (20), and the device (10) jumping back automatically into its basic position after the switching knob (14) is released, characterized in that the base plate (24) of the housing (12) is provided in its peripheral region, such as for example at its two free end sections (34/1, 34/2), along a common longitudinal side (38) of the base plate in each case with a formed-on leaf spring (36/1, 36/2), which leaf springs have at their free end sections on the side pointing away from the printed circuit board (20) in each case a switching ramp (48/1, 48/2) which is also formed on and rises from the respective free end section in a tapering shape, furthermore have, on the side, opposite the respective switching ramp (48/1, 48/2), of the corresponding leaf spring (36/1, 36/2), a preferably pin-shaped holding element (50/1, 50/2) which is also formed on and to which in each case an electrically conductive contact element (18/1, 18/2) is secured, which contact element is located in the Off position of the device (10) at a small distance directly above the conductor tracks (56/1, 56/2; 58/1, 58/2), to be connected electrically in the On position by means of the associated contact element (18/1, 18/2), on- the upper side (54) of the printed circuit board (20), and in that between the two free ends (40/1, 40/2), which are opposite one another in a plane, of the leaf springs (36/1, 36/2) a gap (42) of such a width is formed that a switching element (92) which protrudes laterally out of the subsection (88) of the switching knob (14) and is fixed on both sides in the basic position can be accommodated therein.

2. Device (10) according to Claim 1, characterized in that the switching knob (14) is composed of a head part (72) and a foot part (74) which is connected axially to the head part (72), the subsection (88), which is positioned upright on the printed circuit board (20), of the foot part (74) bearing the switching element (92) and the central section (86), which adjoins at a distance from the printed circuit board, having a smaller diameter than the subsection (88) and being surrounded coaxially by the spring element (16) which is supported on the one hand on the shoulder (94) which is formed between subsection (88) and central section (86) and, on the other hand, on the shoulder (32), at a distance from the printed circuit board, of the guide (28) of the foot part in the head part (26) of the housing in a mechanically pretensioned fashion.

3. Device (10) according to one of Claims 1 or 2, characterized in that, on the base plate (24) of the housing (12) in the region on either side of the switching element (92), in each case one holding face (44/1, 44/2) for the central basic position of the switching element (92) is provided.

4. Device (10) according to one of Claims 1 to 3, characterized in that, on the base plate (24) of the housing (12) in the region on either side of the switching element (92), in each case a lateral stop (70/1, 70/2) for the two On positions of the switching element (92) is provided.

5. Device (10) according to one of Claims 1 to 4, characterized in that holding elements (50/1, 50/2) for the contact elements (18/1, 18/2) are provided which are preferably of pin-shaped design and have such a length that they are guided displaceably in holes (52/1, 52/2) on the printed circuit board (20) both in the On and in the Off position.

6. Device (10) according to one of Claims 1 to 5, characterized in that the holding elements (50/1, 50/2) have locking elements, for example barbs, for the elastic contact elements (18/1, 18/2).

7. Device (10) according to one of Claims 1 to 6, characterized in that the spring element (16) is a helical spring.

8. Device (10) according to one of Claims 1 to 7, characterized in that the housing (12) is connected to the printed circuit board (20) and/or additionally to a carrier board (64), holding the printed circuit board (20), by means of screws as attachment means (22).

9. Device according to one of Claims 1 to 8, characterized in that the base plate (24) of the housing (12) is held in the correct position with respect to the printed circuit board (20) by means of guide projections (66), bushings or the like which are secured to the printed circuit board (20) and/or a carrier board (64).

10. Device (10) according to one of Claims 1 to 9, characterized in that reinforcement ribs (60) are also formed onto the side, facing the printed circuit board (20), of the base plate (24) of the housing (12).

## Revendications

1. Dispositif (10) pour la mise en service et hors service de consommateurs électriques, notamment d'instruments d'affichage équipant un tableau de bord de véhicule automobile, comprenant un boîtier (12) fixé à la plaque de circuit imprimé (20), dont la plaque de base (24) est parallèle à la face supérieure (54) de la plaque de circuit imprimé (20) portant les chemins conducteurs (56/1, 56/2 ; 58/1, 58/2) et comportant un bouton de commande (14), sortant sensiblement au milieu du boîtier (12), du côté éloigné de la plaque de circuit imprimé, et qui est perpendiculaire à la plaque de base (24), le bouton de commutation (14), partant d'une position de base, médiane dans le sens de rotation, et qui maintient électriquement hors circuit les chemins conducteurs concernés (56/1, 56/2 ; 58/1, 58/2), peut être mis par une traction axiale de courte course, agissant contre la précontrainte mécanique d'un élément à ressort (16), puis par une courte rotation dans l'un de ces deux sens de rotation possibles, chaque fois dans une position UN, reliant électriquement les conducteurs électriques définis par le sens de rotation sur la plaque de circuit imprimé (20), et lorsqu'on relâche le bouton de commutation (14), le dispositif revient automatiquement et élastiquement dans sa position de base, caractérisé en ce que la plaque de base (24) du boîtier (12) est munie dans sa zone périphérique comme par exemple à ses deux segments d'extrémités libres (34/1, 34/2), le long d'un grand côté commun (38) de la plaque de base, chaque fois avec un ressort lames (36/1, 36/2) formé dans la masse, et qui à ses segments d'extrémités libres du côté qui s'écarte de la plaque de circuit imprimé (20), possède chaque fois une rampe de commutation (48/1, 48/2) formée sur le segment d'extrémités libres respectif, cette rampe ayant une forme de coin, et de plus du côté du ressort lames (36/1, 36/2) opposé à la rampe de commutation respective (48/1, 48/2), il est prévu un élément de retenue (50/1, 50/2) de préférence en forme de téton, et qui est également moulé dans la masse, et sur lequel est fixé chaque fois un élément de contact conducteur d'électricité (18/1, 18/2) qui lorsque le dispositif (10) est en position hors service, se trouve à faible distance directement au-dessus des chemins conducteurs (56/1, 56/2 ; 58/1, 58/2) à relier électriquement par l'élément de contact correspondant (18/1, 18/2) pour la position UN sur la face supérieure (54) de la plaque de circuit imprimé (20), et en ce qu'entre les deux extrémités libres (40/1, 40/2) des ressorts lames (36/1, 36/2) qui sont en regard l'une de l'autre dans un plan, on a un intervalle (42) d'une largeur lui permettant de recevoir un élément de commutation (92) dépassant latéralement du segment inférieur (88) du bouton de commutation (14) et qui en position de base, est fixé des deux côtés.

2. Dispositif (10) selon la revendication 1, caractérisé en ce que le bouton de commutation (14) se compose d'une tête (72) et d'une base (74) reliée axialement à la tête (72), le segment inférieur (88) de la base (74) qui s'appuie sur la plaque de circuit imprimé (20) porte l'élément de commutation (92) et le segment médian (86) qui fait suite au ressort lames conductrices à un diamètre plus petit que le segment inférieur (88) et est entouré coaxialement par l'élément de ressort (16) qui s'appuie d'un côté contre l'épaulement (94) formé entre le segment inférieur (88) et le segment médian (86) et d'autre part contre l'épaulement (32) du guide (28) éloigné de la plaque de circuit imprimé, par précontrainte mécanique dans la partie de tête (26) du boîtier.

3. Dispositif (10) selon l'une des revendications 1 et 2, caractérisé en ce que la plaque de base (24) du boîtier (12) est munie dans la zone de part et d'autre de l'élément de commutation (92) chaque fois d'une surface de retenue (44/1, 44/2) pour la position de base médiane de l'élément de commutation (92).

4. Dispositif (10) selon l'une des revendications 1 à 3, caractérisé en ce que sur la plaque de base (24) du boîtier (12), dans la zone de part et d'autre de l'élément de commutation (92), il y a chaque fois une butée latérale (70/1, 70/2) pour les deux positions UN de marche de l'élément de commutation (92).

5. Dispositif (10) selon l'une des revendications 1 à 4, caractérisé en ce que les éléments de fixation (50/1, 50/2) sont prévus pour les éléments de contact (18/1, 18/2) qui sont de préférence réalisés en forme de téton et ont une longueur telle qu'ils sont guidés à la fois dans la position en circuit et la position hors circuit, coulissant dans les orifices (52/1, 52/2) de la plaque de circuit imprimé (20).

6. Dispositif (10) selon l'une des revendications 1 à 5, caractérisé en ce que les éléments de fixation (50/1, 50/2) comportent des moyens de blocage comme par exemple des crochets d'arrêt pour les éléments de contact élastiques (18/1, 18/2).

7. Dispositif (10) selon l'une des revendications 1 à 6, caractérisé en ce que l'élément à ressort (16) est un ressort hélicoïdal.

8. Dispositif (10) selon l'une des revendications 1 à 7, caractérisé en ce que le boîtier (12) est relié à la plaque de circuit imprimé (20) et/ou en plus avec une plaque de support (64) portant la plaque de circuit imprimé (20), par l'intermédiaire de vis constituant les moyens de fixation (22).

9. Dispositif (10) selon l'une des revendications 1 à 8, caractérisé en ce que la plaque de base (24) est maintenue à l'aide de prolongements de guidage (66), de douilles ou moyens analogues fixés à la plaque de circuit imprimé (20) et/ou à la plaque de base (64), et qui est maintenue en position par rapport à la plaque de circuit imprimé (20).

10. Dispositif (10) selon l'une des revendications 1 à 9, caractérisé en ce que du côté de la plaque de base (24) du boîtier (12) tourné vers la plaque de circuit imprimé (20), il y a des nervures de renforcement (60).
